# EUROPEAN PATENT APPLICATION

(11) **EP 3 228 656 A1**
(43) Date of publication of application: **11.10.2017**
(21) Application number: 16163657.6
(22) Date of filing: 04.04.2016
(51) Int. Cl.: C08J 9/04, B05D 1/10, B29C 44/46, C08J 9/10, C08J 9/16, C08J 9/228, C08J 9/00

(54) **FOAMING PROCESS BY THERMAL SPRAYING**

(71) Applicant: Zephyros Inc., Romeo, MI 48065 (US)
(72) Inventor: CROUZET, François, 67380 LINGOLSHEIM (FR)
(74) Representative: Kutzenberger Wolff & Partner

(57) **Abstract**

The invention relates to a process for the provision of a foamed layer (20) of a polymer composition on the surface (12) of a substrate (11), the process comprising the steps of (i) providing a heat-foamable curable polymer composition, wherein the composition is in form of particles having a particle size characterized by a D₅₀ value within the range of from 500 µm to 1500 µm, (ii) mixing the heat-foamable curable polymer composition with a carrier gas stream, (iii) spraying the composition on the surface of the substrate using a nozzle (1, 30), and (iv) heating the composition during its flight from the nozzle (1, 30) to the surface (12) of the substrate (11).

## Description

The present invention relates to a process for the provision of a foamed layer of a polymer composition on the surface of a substrate.

Foamed and cured polymer compositions are useful in many technical fields including automotive industry and aviation industry. Such foams assist in the reduction of vibration and noise. In this regard, reinforced and vibrationally damped components can have increased stiffness which will reduce natural frequencies that resonate through the automotive chassis thereby reducing transmission, blocking or absorbing noise through the use of the conjunctive acoustic product. By increasing the stiffness and rigidity of the components of a vehicle, the amplitude and frequency of the overall noise, vibration or both that occurs from the operation of the vehicle and is transmitted through the vehicle can be reduced. Furthermore, such foams may provide corrosion resistance and the like.

In conventional techniques, foamed and cured polymer compositions are applied to substrates in two step processes. In a first step the composition is applied in an unfoamed and uncured state to a substrate. In a second step, upon subsequent activation, typically by heat and/or irradiation, the compositions are activated, i.e. to foam and cure.

There is a demand for a process to yield a foamed layer of a polymer composition on the surface of a substrate at the site of manufacture in a single step without requiring subsequent activation by heat and/or irradiation. The composition should be applicable by easy handling, e.g. by a hand held applicator, and should not require laborious processing and sophisticated technology.

It is an object of the invention to provide a process for the provision of a foamed layer of a polymer composition on the surface of a substrate which does not require a separate activation step after application of the composition to the substrate.

This object has been achieved by the subject-matter of the patent claims.

According to an aspect of the invention a process for the provision of a foamed layer of a polymer composition on the surface of a substrate is presented, the process comprising the steps of:
- providing a heat-foamable curable polymer composition, wherein the composition is in form of particles having a particle size characterized by a D₅₀ value within the range of from 500 µm to 1500 µm,
- mixing the heat-foamable curable polymer composition with a carrier gas stream,
- spraying the composition on the surface of the substrate using a nozzle, and
- heating the composition during its flight from the nozzle to the surface of the substrate.

According to the present invention a heat-foamable curable polymer composition is provided, wherein the composition is in form of particles having a particle size characterized by a D₅₀ value within the range of from 500 µm to 1500 µm. The composition is mixed with a carrier gas stream and sprayed from a nozzle on the surface of the substrate. The composition is heated during its flight form the nozzle to the surface of the substrate thereby activating the composition so that foaming and curing of the composition is initiated preferably after the composition has left the nozzle and before the composition hits the substrate. Thus, undesired activation of the composition inside the nozzle can be avoided while ensuring that activation is initiated before deposition of the composition on the substrate. It has been found that particles with a D₅₀ value in the given range are less susceptible to undesired clogging of the nozzle than particles with a smaller or larger D₅₀ values.

The particles preferably have a narrow particle size distribution. Suitable methods to measure the particle size of a particulate composition are known to the skilled artisan and include laser diffraction and image analysis. Preferably, for the purpose of the specification, the "particle size" is expressed in terms of the D₅₀ value (median). In a preferred embodiment, the particle size is measured using a laser particle size meter, preferably with the powder dispersed in deionized water.

The polymer composition is heat-foamable, i.e. after supply of sufficient heat foams. Foaming typically relies on one or more blowing agents that are contained in the composition, optionally in combination with one or more blowing accelerators.

The polymer composition is curable, i.e. capable of cross-linking upon activation, preferably by heat and/or radiation, particularly heat. Thus, preferably, the composition is heat-curable and heating to the activation temperature preferably causes both, foaming and curing.

According to a preferred embodiment of the invention the heat-foamable curable polymer composition comprises a blowing agent and the composition is heated to a temperature such that the blowing agent is activated and initiates foaming of the composition before it hits the surface of the substrate. The composition preferably contains a heat activatable blowing agent for example one that decomposes to produce gas at elevated temperatures, typically in the range of from about 150 °C to about 220 °C. The blowing agent may be selected to generate gasses for foaming at around the activation temperature of the cross linking agent.

According to another preferred embodiment the composition is heated by a flame. Advantageously the composition is sprayed towards the flame or through the flame so that the composition will not be heated before being ejected from the nozzle. Thereby clogging of the nozzle can be prevented.

Advantageously, the flame is generated using a torch integrated into the nozzle and supplied with a combustible gas stream. Thus, the nozzle may fulfil two separate functions: On the one hand spraying the heat-foamable curable polymer composition using the carrier gas stream and on the other hand heating the heat-foamable curable polymer composition by the flame of the torch using the combustible gas stream. Two separate gas streams may be provided to the nozzle: the carrier gas stream and the combustible gas stream.

According to a preferred embodiment of the invention the combustible gas stream comprises propylene and/or oxygen. Preferably, the combustible gas stream is a mixture of propylene and oxygen. The ratio of propylene to oxygen is preferably in the range of 2/12 to 4/12, more preferably 3/12.

According to another preferred embodiment the flame extends from the nozzle towards the substrate and the ratio of the length of the flame to the distance between the nozzle and the substrate is within the range of 0.5 to 0.9, preferably within the range of 0.6 to 0.9, more preferably within the range of 0.7 to 0.9, e.g. within the range of 0.8±0.05. The length of the flame typically needs to be shorter than the distance of the nozzle to the surface of the substrate in order to avoid burning or damage of the substrate.

According to a preferred embodiment of the invention the composition is sprayed through a ring-shaped outlet of the nozzle.

Advantageously, the ring-shaped outlet surrounds a heat source, in particular a torch, which is heating the composition when sprayed through the outlet.

Preferably, the a ring-shaped outlet has a width in the range of 0.3 cm - 0.6 cm, preferably in the range of 0.3 cm - 0.5 cm, more preferably in the range of 0.3 cm - 0.4 cm. The width of the ring-shaped outlet opening is preferably tailored to the particle size of the composition particles characterized by the D₅₀ value. It is preferred if the ration of the D₅₀ value to the width of the ring-shaped outlet opening is in the range of 0.125 to 0.5, more preferably in the rage of 0.15 to 0.375.

According to an alternate preferred embodiment of the invention, the heat-foamable and curable polymer composition is heated with the carrier gas stream. When heating the composition using the carrier gas stream it is not necessary to employ other heat sources, in particular a flame. Preferably, the temperature of the carrier gas stream is at least about 100 °C, or at least about 200 °C, more preferably at least about 250 °C, or at least about 350 °C, still more preferably at least about 400 °C or at least about 500 °C. Preferably, the temperature of the carrier gas stream prior to mixing with the heat-foamable and curable polymer composition is at most about 900 °C, or at most about 800 °C, more preferably at most about 750 °C, or at most about 650 °C, still more preferably at most about 600 °C, or at most about 500 °C.

According to another preferred embodiment of the invention, the carrier gas stream is provided with a pressure within the range of 150 kPa to 350 kPa, preferably within the range of 180 kPa to 220 kPa, more preferably within the range of 190 kPa to 210 kPa.

Preferably, the carrier gas stream is an inert carrier gas stream. Thus, the carrier gas has a very little tendency to participate in a chemical reaction with the heat-foamable curable polymer composition; in particular the carrier gas does not react with the composition at all. The carrier gas preferably comprises one of or a combination of nitrogen, carbon dioxide and a noble gas, e.g. helium, neon or argon.

Preferably, the heat-foamable and curable polymer composition when it hits the surface of the substrate has a velocity within the range of from about 50 m/s to about 1000 m/s, more preferably from about 100 m/s to about 1000 m/s. In preferred embodiments, the velocity is within the range of from about 50 m/s to about 400 m/s, more preferably from about 50 m/s to about 300 m/s. Preferred velocities are within the range of about 100±50 m/s, or about 150±50 m/s, or about 200±50 m/s, or about 250±50 m/s, or about 300±50 m/s, or about 350±50 m/s, or about 400±50 m/s, or about 450±50 m/s, or about 500±50 m/s, or about 550±50 m/s, or about 600±50 m/s, or about 650±50 m/s, or about 700±50 m/s, or about 750±50 m/s, or about 800±50 m/s, or about 850±50 m/s, or about 900±50 m/s, or about 950±50 m/s, or about 1000±50 m/s.

According to a preferred embodiment of the invention the distance between the nozzle and the surface of the substrate is in the range of 20 mm to 100 mm. More preferably the distance between the nozzle and the surface of the substrate is in the range of 40 mm to 80 mm, even more preferably in the range of 70 mm to 80 mm.

According to a preferred embodiment of the invention the heat-foamable curable polymer composition comprises (i) 0.1 to 15 wt.-% of a blowing agent, relative to the total weight of the composition; (ii) 0.1 to 10 wt.-% of a curing component, relative to the total weight of the composition; and (iii) 20 to 95 wt.-% of a polymer component, relative to the total weight of the composition.

Preferably, the blowing agent comprises a physical blowing agent and/or a chemical blowing agent. Chemical blowing agents (e.g., those agents that provide for material expansion via a chemical reaction) include but not limited to azodicarbonamide, dinitrosopentamethylenetetramine, hydrazides such as 4,4-oxy-bis-(benzenesulphonylhydrazide), trihydrazinotriazine and N,N'-dimethyl-N,N'-dini-trosoterephthalamide. With physical blowing agent material expansion occurs via a phase change mechanism. Physical blowing agents can comprise a volatile gas trapped in a thermoplastic shell which softens and lets the gas expand at the foaming temperature. An example of such a blowing agent in sold under the trade name Expancel, sold by Akzo Nobel, Sundsvall, Sweden. Preferably, the blowing component comprises one or more blowing agents independently selected from the group consisting of azodicarbonamide, dinitrosopentamethylenetetramine, 4,4'-oxy-bis-(benzenesulphonyl-hydrazide), trihydrazinotriazine and N,N'-dimethyl-N,N'-dinitrosoterephthalamide.

Preferably, the curing component comprises a latent curing agent, i.e. is not reactive under ambient conditions but is heat activatable. Preferably, the curing component has an activation temperature above about 110 °C, more preferably in the range of from about 130 °C to about 220 °C, preferably about 150 °C to about 220 °C. Preferably, the curing component comprises a peroxide and/or a curing agent. The curing component typically initiates cross-linking of the polymer component. This may be achieved by reacting the polymers of the polymer component with one another. Thus, a radical initiator, preferably a peroxide, may be sufficient in order to achieve curing (cross-linking). Any suitable radical initiators having the required activation temperature and crosslinking kinetics at the appropriate temperature may be used. Examples of suitable materials include sulphur cure systems, peroxides, resin cure systems and metallic oxide cure systems. Preferably, the curing component has fast kinetics at low temperature (bake starts, for example a (half life) of less than 30 minutes at 100 °C. Benzoyl peroxide (half life at 100 °C of 23.4 minutes) is a preferred curing agent. It has been found that up to 0.1 wt % to 5 wt % of benzoyl peroxide based on the weight of the formulation is particularly useful. It may be used in a form that is absorbed on a mineral filler. In a particularly preferred embodiment, the curing component is or comprises benzoyl peroxide. Preferably, the curing component comprises one or more curing agents independently selected from the group consisting of aliphatic or aromatic amines or their respective adducts, amidoamines, polyamides, cycloaliphatic amines, anhydrides, polycarboxylic polyesters, isocyanates, phenol-based resins (e.g., phenol or cresol novolac resins, copolymers such as those of phenol terpene, polyvinyl phenol, or bisphenol-A formaldehyde copolymers, bishydroxyphenyl alkanes or the like), or mixtures thereof. The curing agents may include modified and unmodified polyamines or polyamides such as triethylenetetramine, diethylenetriamine tetraethylenepentamine, cyanoguanidine, dicyandiamides and the like. In a particularly preferred embodiment, the curing component is or comprises dicyandiamide

Preferably, the content of the polymer component is within the range of from 30 to 85 wt.-%, relative to the total weight of the composition, more preferably within the range of from 35 to 80 wt.-%, still more preferably within the range of from 40 to 75 wt.-%. Preferably, the polymer component comprises a thermoplastic polymer and/or a thermoset polymer.

The particles of the composition according to the invention have a particle size characterized by a D₅₀ value within the range of from 500 µm to 1500 µm. Preferably, the D₅₀ value is within the range of from 550 µm to 1300 µm; more preferably within the range of from 600 µm to 1100 µm; still more preferably within the range of from 650 µm to 1000 µm. In a preferred embodiment, the D₅₀ value is within the range of 725±200 µm, more preferably 725±175 µm, still more preferably 725±150 µm, yet more preferably 725±125 µm, even more preferably 725±100 µm, most preferably 725±75 µm, and in particular 725±50 µm. In another preferred embodiment, the D₅₀ value is within the range of 775±200 µm, more preferably 775±175 µm, still more preferably 775±150 µm, yet more preferably 775±125 µm, even more preferably 775±100 µm, most preferably 775±75 µm, and in particular 775±50 µm. In still another preferred embodiment, the D₅₀ value is within the range of 825±200 µm, more preferably 825±175 µm, still more preferably 825±150 µm, yet more preferably 825±125 µm, even more preferably 825±100 µm, most preferably 825±75 µm, and in particular 825±50 µm. In yet another preferred embodiment, the D₅₀ value is within the range of 875±200 µm, more preferably 875±175 µm, still more preferably 875±150 µm, yet more preferably 875±125 µm, even more preferably 875±100 µm, most preferably 875±75 µm, and in particular 875±50 µm. In another preferred embodiment, the D₅₀ value is within the range of 925±200 µm, more preferably 925±175 µm, still more preferably 925±150 µm, yet more preferably 925±125 µm, even more preferably 925±100 µm, most preferably 925±75 µm, and in particular 925±50 µm.

In a preferred embodiment of the process according to the invention, the substrate is heated. In another preferred embodiment of the process according to the invention, the substrate is not heated.

The nozzle and the substrate may be moveable relative to each other and the movement can be programmed to deliver the composition precisely in any desired pattern on the surface of the substrate.

Preferably, the substrate comprising metal and/or polymer. Preferably, the substrate is an organo sheet or a composite material.

Preferably, the substrate is an automobile component.

Preferably, the substrate has a thickness within the range of from about 50 µm to about 2000 µm.

These and other aspects of the invention will be apparent from and elucidated with reference to the embodiment described hereinafter.
Fig. 1 depicts a first embodiment of a nozzle in a first schematic sectional view;
Fig. 2 depicts the nozzle according to Fig. 1 in another schematic sectional view;
Fig. 3 depicts a first embodiment of an apparatus for carrying out the inventive process; and
Fig. 4 depicts a second embodiment of an apparatus for carrying out the inventive process.

In the embodiments of the inventive process for the provision of a foamed layer 20 of a polymer composition on the surface 12 of a substrate 11 a heat-foamable curable polymer composition is provided in form of particles having a particle size characterized by a D₅₀ value within the range of from 500 µm to 1500 µm. the heat-foamable curable polymer composition comprises (i) 0.1 to 15 wt.-% of a blowing agent, relative to the total weight of the composition; (ii) 0.1 to 10 wt.-% of a curing component, relative to the total weight of the composition; and (iii) 20 to 95 wt.-% of a polymer component, relative to the total weight of the composition. A particularly preferred composition has been compiled in the table here below:

| | | |
|---|---|---|
| polymer component 40-75 wt.% | 15-25 wt.% | EMA (Ethylene Methyl Acrylate) |
| | | EBA (Ethylene Butyl Acrylate) |
| | 15-25 wt.-% | EVA (Ethylene Vinyl Acetate |
| | 0-10 wt.% | terpolymer EMA/EBA/GMA (GMA: Glycidyl Methacrylate |
| | 10-15 wt.-% | C5/C9 aliphatic or aromatic resin |
| | For all acrylate copolymers: | |
| | - preferred acrylate amount: 20% to 35% | |
| | - melt flow index (190 °C, 2.16 kg, 10 min) from 3 to 300, preferably 10 to 80 | |
| | - melting temperature 60 to 90 °C | |
| curing component 5 wt.-% | peroxide, curing agent | |
| blowing agent 3-9 wt.-% | azodicarbonamide (ADCA) | |
| blowing accelerator 0.1-3 wt.-% | e.g. ZnO, substituted urea, or p toluene sulfonic acid | |
| filler ∼20 wt.-% | | |

The D₅₀ value of the particles of the composition is within the range of from 550 µm to 1300 µm; preferably within the range of from 600 µm to 1100 µm; more preferably within the range of from 650 µm to 1000 µm; still more preferably within the range of 825±100 µm.

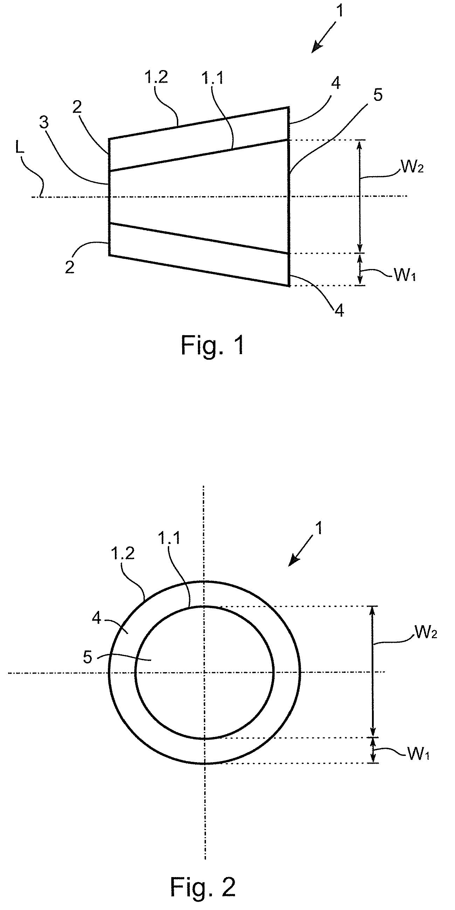

Figs. 1 and 2 illustrate a first embodiment of a nozzle 1 for use in a first embodiment of the inventive process for the provision of a foamed layer 20 of a polymer composition on the surface 12 of a substrate 11. The nozzle 1 comprises an inner truncated cone 1.1 and an outer truncated cone 1.2, which are arranged concentrically along a longitudinal axis L. Both the inner truncated cone 1.1 and an outer truncated cone 1.2 are manufactured from a metal, i.e. steel.

The nozzle 1 comprises a carrier gas inlet 2 for provision of a carrier gas stream mixed with the heat-foamable curable polymer composition. The carrier gas inlet 2 is arranged on a first side of the nozzle 1 and extends from the outer wall of the inner truncated cone 1.1 to the inner wall of the outer truncated cone 1.2. Thus, the carrier gas inlet 3 is ring-shaped.

Furthermore, a combustible gas stream inlet 3 is arranged on the first side of the nozzle 1 for the provision of a combustible gas stream. The combustible gas stream inlet 3 is of circular shape. It extends in between the inner walls of the inner truncated cone 1.1.

On a second side of the nozzle 1, the second side being arranged opposite the first side, the nozzle has a ring-shaped carrier gas outlet 4 as well as a torch 5 in the form of a circular combustible gas outlet 5. The ring-shaped carrier gas outlet 4 surrounds the torch 5.The ring-shaped outlet 4 has a width W₁ in the range of 0,3 cm -0,6 cm, preferably in the range of 0,3 cm - 0,5 cm, more preferably in the range of 0,3 cm - 0,4 cm

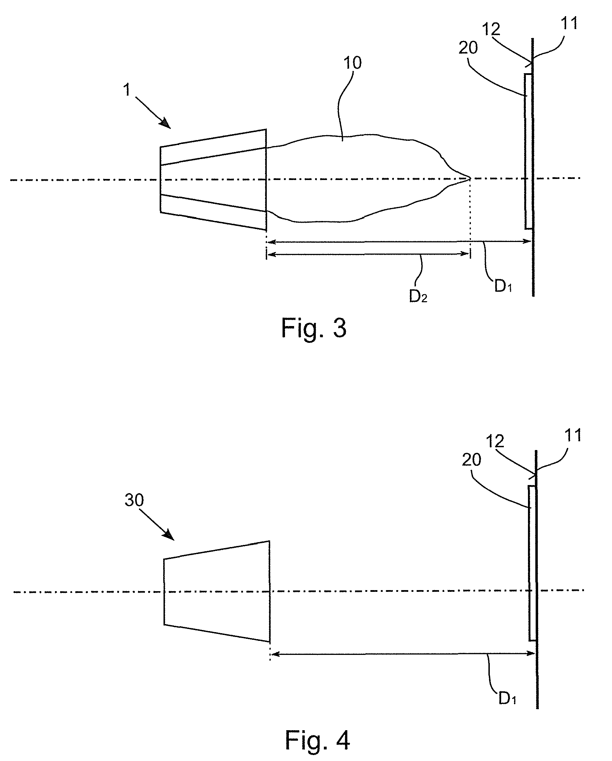

Referring to Fig. 3, a first embodiment of the inventive process will be described below.

In a first step, a heat-foamable curable polymer composition as described above is provided. The composition is in form of particles having a particle size characterized by a D₅₀ value within the range of from 500 µm to 1500 µm. In a second step, the heat-foamable curable polymer composition is mixed with a carrier gas stream. Then the composition is sprayed on the surface 12 of the substrate 11 using the nozzle 1. Finally, the composition is heated during its flight from the nozzle 1 to the surface 12 of the substrate 11 so as to activate the composition. The heat-foamable curable polymer composition comprises a blowing agent. When heating the composition during flight, the composition is heated to a temperature such that the blowing agent is activated and initiates foaming of the composition before it hits the surface 12 of the substrate 11.

The carrier gas stream is provided with a pressure within the range of 150 kPa to 350 kPa, preferably within the range of 180 kPa to 220 kPa, more preferably within the range of 190 kPa to 210 kPa. The carrier gas stream is an inert carrier gas stream comprising one of or a combination of nitrogen, carbon dioxide and a noble gas, e.g. helium, neon or argon. The carrier gas stream accelerates the heat-foamable and curable polymer composition such that it has a velocity within the range of from about 50 m/s to about 1000 m/s, more preferably from about 100 m/s to about 1000 m/s, when it hits the surface 12 of the substrate 11.

During flight, the composition is heated by a heat source in the form of the torch 5. The torch 5 is supplied with the combustible gas stream and generates a flame 10. The combustible gas stream comprises a mixture of propylene and/or oxygen, preferably a mixture, wherein the ratio of propylene to oxygen is in the range of 2/12 to 4/12, more preferably around 3/12. The composition is sprayed through the flame 10 so that the composition will not be heated before being ejected from the nozzle 1.

The flame 10 extends from the nozzle 1 towards the substrate 11 and the ratio of the length D₂ of the flame 10 to the distance D₁ between the nozzle 1 and the substrate 11 is within the range of 0.5 to 0.9, preferably within the range of 0.6 to 0.9, more preferably within the range of 0.7 to 0.9, e.g. within the range of 0.8±0.05.

During spraying, the nozzle 1 is moved along the substrate 11 so as to cover different regions of the surface 12 of the substrate 11 with the foamed layer 20. The substrate 11 is heated prior to spraying the composition onto the substrate 11. The substrate 11 may e.g. be heated to a temperature in the region of 80°C to 120°C. Heating may be carried out with the torch 5 of the nozzle 1 while supply of the carrier gas stream through carrier gas outlet 4 is shut off.

Now referring to Fig. 4, a second embodiment of the inventive process will be described below.

According to the second embodiment of the inventive process, a heat-foamable curable polymer composition is provided as described above, wherein the composition is in form of particles having a particle size characterized by a D₅₀ value within the range of from 500 µm to 1500 µm. The composition is mixed with a carrier gas stram and the mixture is supplied to an alternate nozzle 30. The composition is sprayed on the surface 12 of the substrate 11 using the alternate nozzle 30. The alternate nozzle 30 lacks an inlet for a combustible gas stream. Thus, the alternate nozzle 30 does not include a torch 5. Instead, the nozzle 30 is solely supplied with a carrier gas stream that has been mixed with the particles of the heat-foamable curable polymer composition.

The heat-foamable curable polymer composition comprises a blowing agent and the composition is heated to a temperature such that the blowing agent is activated and initiates foaming of the composition before it hits the surface 12 of the substrate 11. In contrast to the first embodiment of the process, according to the second embodiment of the process, heated carrier gas is employed as a heat source in order to activate the composition during flight. The carrier gas stream is an inert carrier gas stream, e.g. nitrogen, carbon dioxide, a noble gas, or a combination thereof. Alternatively, the carrier gas may be air. Preferably, the temperature of the carrier gas stream is at least about 100 °C, or at least about 200 °C, more preferably at least about 250 °C, or at least about 350 °C, still more preferably at least about 400 °C or at least about 500 °C. Preferably, the temperature of the carrier gas stream prior to mixing with the heat-foamable and curable polymer composition is at most about 900 °C, or at most about 800 °C, more preferably at most about 750 °C, or at most about 650 °C, still more preferably at most about 600 °C, or at most about 500 °C.

In the embodiments of the processes presented above a foamed layer of a polymer composition is provided on the surface 12 of a substrate 12. The processes comprise the steps of (i) providing a heat-foamable curable polymer composition, wherein the composition is in form of particles having a particle size characterized by a D₅₀ value within the range of from 500 µm to 1500 µm, (ii) mixing the heat-foamable curable polymer composition with a carrier gas stream, (iii) spraying the composition on the surface of the substrate using a nozzle 1, 30, and heating the composition during its flight from the nozzle 1, 30 to the surface 12 of the substrate 11. Thereby, a foamed layer 20 of a polymer composition on the surface 12 of the substrate 11 is provided which does not require a separate activation step after application of the composition to the substrate 11.

### List of reference signs:

- 1: nozzle
- 1.1: inner truncated cone
- 1.2: outer truncated cone
- 2: carrier gas inlet
- 3: combustible gas inlet
- 4: carrier gas outlet
- 5: torch
- 10: flame
- 11: substrate
- 12: surface
- 20: foam coating
- 30: nozzle

- D₁: spraying distance
- D₂: flame length
- L: axis
- W₁: width of carrier gas outlet
- W₂: diameter of torch

## Claims

1. A process for the provision of a foamed layer (20) of a polymer composition on the surface (12) of a substrate (11), the process comprising the steps of
- providing a heat-foamable curable polymer composition, wherein the composition is in form of particles having a particle size **characterized by** a D₅₀ value within the range of from 500 µm to 1500 µm,
- mixing the heat-foamable curable polymer composition with a carrier gas stream,
- spraying the composition on the surface of the substrate using a nozzle (1, 30), and
- heating the composition during its flight from the nozzle (1, 30) to the surface (12) of the substrate (11).

2. The process according to claim 1, wherein the heat-foamable curable polymer composition comprises a blowing agent and the composition is heated to a temperature such that the blowing agent is activated and initiates foaming of the composition before it hits the surface (12) of the substrate (11).

3. The process according to any of the preceding claims, wherein the composition is heated by a flame (10).

4. The process according to claim 3, wherein the flame (10) is generated using a torch (5) integrated into the nozzle (1) and supplied with a combustible gas stream.

5. The process according to claim 4, wherein the combustible gas stream comprises propylene and/or oxygen.

6. The process according to any of claims 3 to 5, wherein the flame (10) extends from the nozzle (1) towards the substrate (12) and the ratio of the length (D₂) of the flame (10) to the distance (D₁) between the nozzle (1) and the substrate (12) is within the range of 0.5 to 0.9, preferably within the range of 0.6 to 0.9, more preferably within the range of 0.7 to 0.9, e.g. within the range of 0.8±0.05.

7. The process according to any of the preceding claims, wherein the composition is sprayed through a ring-shaped outlet (4) of the nozzle (1).

8. The process according to claim 8, wherein the ring-shaped outlet (4) surrounds a heat source, in particular a torch (5), which is heating the composition when sprayed through the outlet (4).

9. The process according to any of claims 7 or 8, wherein the a ring-shaped outlet (4) has a width (W₁) in the range of 0,3 cm - 0, 6 cm, preferably in the range of 0,3 cm - 0,5 cm, more preferably in the range of 0,3 cm - 0,4 cm.

10. The process according to any of claims 1 or 2, wherein the heat-foamable and curable polymer composition is heated with the carrier gas stream

11. The process according to any of the preceding claims, wherein the carrier gas stream is provided with a pressure within the range of 150 kPa to 350 kPa, preferably within the range of 180 kPa to 220 kPa, more preferably within the range of 190 kPa to 210 kPa.

12. The process according to any of the preceding claims, wherein the carrier gas stream is an inert carrier gas stream, preferably one of or a combination of nitrogen, carbon dioxide and a noble gas, e.g. helium, neon or argon.

13. The process according to any of the preceding claims, wherein the heat-foamable and curable polymer composition when it hits the surface (12) of the substrate (11) has a velocity within the range of from about 50 m/s to about 1000 m/s, more preferably from about 100 m/s to about 1000 m/s.

14. The process according to any of the preceding claims, wherein the heat-foamable curable polymer composition comprises
- 0.1 to 15 wt.-% of a blowing agent, relative to the total weight of the composition;
- 0.1 to 10 wt.-% of a curing component, relative to the total weight of the composition; and
- 20 to 95 wt.-% of a polymer component, relative to the total weight of the composition.

15. The process according to any of the preceding claims, wherein the D₅₀ value is within the range of from 550 µm to 1300 µm; preferably within the range of from 600 µm to 1100 µm; more preferably within the range of from 650 µm to 1000 µm; still more preferably within the range of 825±100 µm.
